(19) **Europäisches Patentamt / European Patent Office / Office européen des brevets**

(11) **EP 4 586 581 A1**

(12) **EUROPEAN PATENT APPLICATION**
published in accordance with Art. 153(4) EPC

(43) Date of publication:
**16.07.2025 Bulletin 2025/29**

(21) Application number: **23876221.5**

(22) Date of filing: **27.06.2023**

(51) International Patent Classification (IPC):
**H04L 45/748** (2022.01)

(52) Cooperative Patent Classification (CPC):
**H04L 45/748;** Y02D 10/00

(86) International application number:
**PCT/CN2023/102617**

(87) International publication number:
**WO 2024/078011 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.10.2022 CN 202211263496**

(71) Applicant: **Sanechips Technology Co., Ltd.**
**Shenzhen, Guangdong 518055 (CN)**

(72) Inventors:
• **WANG, Siyu**
  **Shenzhen, Guangdong 518055 (CN)**
• **LIU, Fengsong**
  **Shenzhen, Guangdong 518055 (CN)**
• **ZHU, Zhihua**
  **Shenzhen, Guangdong 518055 (CN)**
• **LIU, Hengqi**
  **Shenzhen, Guangdong 518055 (CN)**

(74) Representative: **Canzler & Bergmeier**
**Patentanwälte**
**Partnerschaft mbB**
**Despag-Straße 6**
**85055 Ingolstadt (DE)**

(54) **PARALLEL TABLE LOOKUP APPARATUS, METHOD, AND DEVICE, AND COMPUTER-READABLE STORAGE MEDIUM**

(57) Embodiments of the present application relate to the technical field of integrated circuits, and disclose a parallel table lookup apparatus, a parallel table lookup method, a parallel table lookup device, and a computer-readable storage medium. The parallel table lookup apparatus provided in the present application comprises: a plurality of groups of index table modules, a first interleaver, a shared resource pool module, and a second interleaver.

FIG. 1

**Description**

CROSS-REFERENCE TO RELATED APPLICATIONS

The present application claims the priority of Chinese Patent Application No. 202211263496.2, filed on October 11, 2022, the contents of which are incorporated herein in their entirety by reference.

TECHNICAL FIELD

The present application relates to the technical field of integrated circuits, in particular to a parallel table lookup apparatus, a parallel table lookup method, a parallel table lookup device and a computer-readable storage medium.

BACKGROUND

Long Prefix Match (LPM) technology is a core technology for a router to perform routing and forwarding based on an IP address, and determines performance of a router product to a great extent, therefore, selecting a proper and efficient LPM algorithm is a key factor in improving competitiveness of the router product.
At present, in practical applications, the LPM algorithm is mainly implemented in a hardware manner, and with rapid growths of a network bandwidth and a number of network nodes, a high demand on forwarding performance, and a limitation of a main frequency of a memory drive a chip to tend to adopt a parallel architecture to process multiple messages in parallel. Therefore, a demand of accessing a same routing table for multiple times or from multiple ports in a single period is brought, and improves a flow bandwidth of the chip by internal parallel processing.
For such application scenarios, existing hardware-implemented LPM algorithms generally replicate entry resources to meet expectations of multi-path parallel table lookup, which expands resource overhead by multiples, for example, may lead to a multiple increase in overhead of circuit and storage resources.

SUMMARY

An embodiment of the present application provides a parallel table lookup apparatus, including: a plurality of index table modules respectively connected to different preset input channels and each configured to receive a key value from the preset input channel and generate a table lookup request based on the key value; a first interleaver, connected to the index table modules, and configured to receive the table lookup request from the index table module and distribute the table lookup request; a shared resource pool module, connected to the first interleaver, and configured to receive the table lookup request from the first interleaver and generate a matching result based on the table lookup request and a preset rule matching table; and a second interleaver, connected to the shared resource pool module and a plurality of preset output channels, and configured to receive the matching result from the shared resource pool module and feed the matching result to the preset output channel corresponding to the preset input channel.
An embodiment of the present application provides a parallel table lookup method, including: inserting a preset rule to generate a preset rule matching table; generating a table lookup request based on a key value from a preset input channel; matching the key value with the preset rule based on the table lookup request and the preset rule matching table to obtain a matching result; and feeding the matching result to a preset output channel corresponding to the preset input channel.
An embodiment of the present application provides a parallel table lookup device, including: a memory, a processor, and a computer program stored on the memory to be executed by the processor, the computer program, executed by the processor, causes the processor to implement the parallel table lookup method described above.
An embodiment of the present application provides a computer-readable storage medium having a computer program stored thereon, the computer program, executed by a processor, causes the processor to implement the parallel table lookup method described above.

BRIEF DESCRIPTION OF DRAWINGS

In order to more clearly illustrate the technical solutions of the embodiments of the present application, the drawings used in the description of the implementations are briefly introduced below, and it is apparent that the drawings in the description below are only a part of the implementations of the present application, those skilled in the art can obtain other drawings without creative efforts, and in the drawings:

Fig. 1 is a schematic structural diagram of a parallel table lookup apparatus provided in an embodiment of the present application;

Fig. 2 is a schematic diagram of an application scenario of a parallel table lookup apparatus provided in an embodiment of the present application;

Fig. 3 is a schematic diagram of a detailed structure of a parallel table lookup apparatus provided in an embodiment of the present application;

Fig. 4 is a schematic diagram of a format of a row of an index table related to a parallel table lookup apparatus provided in an embodiment of the present application;

Fig. 5 is a schematic diagram of an index matching rule related to a parallel table lookup apparatus provided in an embodiment of the present application;

Fig. 6 is a schematic flowchart of a parallel table lookup method provided in an embodiment of the present application;

Fig. 7 is a schematic flowchart of a process of inserting a rule related to a parallel table lookup method provided in an embodiment of the present application; and

Fig. 8 is a schematic diagram of a hardware structure of a parallel table lookup device provided in an embodiment of the present application.

DETAIL DESCRIPTION OF EMBODIMENTS

In the following description, specific details such as specific system architectures and technologies are set forth for the purpose of illustration rather than limitation, to facilitate a thorough understanding of the embodiments of the present application. However, it should be apparent to one skilled in the art that the embodiments of the present application may be implemented in other embodiments without these specific details. In other instances, detailed descriptions of well-known systems, devices, circuits, and methods are omitted to avoid the description of the embodiments of the present application from being obscured by unimportant details.

It should be noted that, although a logical order is illustrated in the flowcharts, in some cases, the operations shown or described may be performed in an order different from that shown in the flowcharts. The terms "first interleaver", "second interleaver" and the like in the description and claims, as well as the above-described drawings, are used for distinguishing between similar elements and not for describing a particular sequential or chronological order.

It further should be understood that, in the description of the present application, any reference to "an embodiment" or "some embodiments" means that specific features, structures, or characteristics described in combination with the embodiment are included in one or more embodiments of the present application. Therefore, the statements such as "in some implementations" that appear in different parts of the specification do not necessarily refer to the same implementation(s), but mean "one or more, but not all, implementations", unless otherwise specifically emphasized. The terms "include", "comprise", "have" and their variations all mean "including but not limited to", unless otherwise specifically emphasized.

Route lookup and packet forwarding mainly determine "next hop" information for forwarding by looking up a routing table, and the routing table storing the "next hop" information is also called a Forward Information Base (FIB). Because the current network adopts an address structure of Classless Inter Domain Routing (CIDR), multiple prefixes that may match with an IP address of an incoming packet generally exist in a same routing table. In order to perform routing and forwarding more efficiently and find an optimal forwarding path, a router is expected to find a matching result with a longest prefix based on the routing table. The way for finding the matching result with the longest prefix in the routing table composed of prefixes is the Long Prefix Match (LPM) technology. The LPM technology is a core technology for a router to perform routing and forwarding based on an IP address, and determines performance of a router product to a great extent, therefore, selecting a proper and efficient LPM algorithm is a key factor in improving competitiveness of the router product.

Existing LPM algorithms are divided into two types based on application environment, i.e., software-implemented and hardware-implemented. However, for a high-frequency and high-bandwidth network application scenario such as a core network, a bearer network, a data center, etc., high-end routing and switching chips or devices are to be provided, and it may be possible that performance of a software-implemented LPM algorithm cannot meet actual expectations, so a hardware-implemented LPM algorithm is generally adopted in practical applications. In the hardware-implemented LPM algorithm, methods that balance resource overhead and forwarding efficiency are mainly based on a Hash table and a Ternary Content Addressable Memory (TCAM), chip resource overhead desired for a large-capacity routing table accounts for a relatively large proportion, and a technical method with higher cost performance is to be continuously explored to reduce research and development cost. Moreover, with rapid growths of a network bandwidth and a number of network nodes, a high demand on forwarding performance, and a limitation of a main frequency of a memory drive a chip to tend to adopt a parallel architecture to process multiple messages in parallel. Therefore, a demand of accessing a same routing table for multiple times or from multiple ports in a single period are brought, and improves a flow bandwidth of the chip by internal parallel processing.

For such application scenarios, existing hardware-implemented LPM algorithms generally replicate entry resources to meet expectations of multi-path parallel table lookup (i.e., table lookup in parallel from multi paths), which expands resource overhead by multiples, for example, may lead to a multiple increase in overhead of circuit and storage resources.

Embodiments of the present application provide a parallel table lookup apparatus, a parallel table lookup method, a parallel table lookup device and a computer-readable storage medium, the parallel table lookup apparatus includes: a plurality of index table modules respectively connected to different preset input channels and each configured to receive a key value from the preset input channel and generate a table lookup request based on the key value; a first interleaver, connected to the index table modules, and configured to receive the table lookup request from the index table module and distribute the table lookup request; a shared resource pool module, connected to the first interleaver, and configured to receive the table lookup request from the first interleaver and generate a matching result based on the table lookup request and a preset rule matching table; and a second interleaver, connected to the shared resource pool module and a plurality of preset output channels, and configured to receive the matching result from the shared resource pool module and feed the matching result to the preset output channel corresponding to the preset input channel. Compared with existing technologies, the technical solution in the embodiments of the present application overcomes the difficulty for designing a LPM module with a large-capacity routing table, and solves a problem that the resource overhead increases by multiples along with the increase of ports for accessing the same routing table. The parallel table lookup apparatus provided in the embodiment of the present application considers the current expectations of multi-path parallel table lookup, provides a hierarchical search and matching mechanism and a mechanism of sharing table-entry storage resources between multi channels, which reduces storage resource overhead for realizing LPM table lookup under the expectations of multi-path parallel table lookup.

The parallel table lookup apparatus, the parallel table lookup method, the parallel table lookup device and the computer-readable storage medium provided in the embodiments of the present application are specifically described through following implementations, the parallel table lookup apparatus in the present application is firstly described.

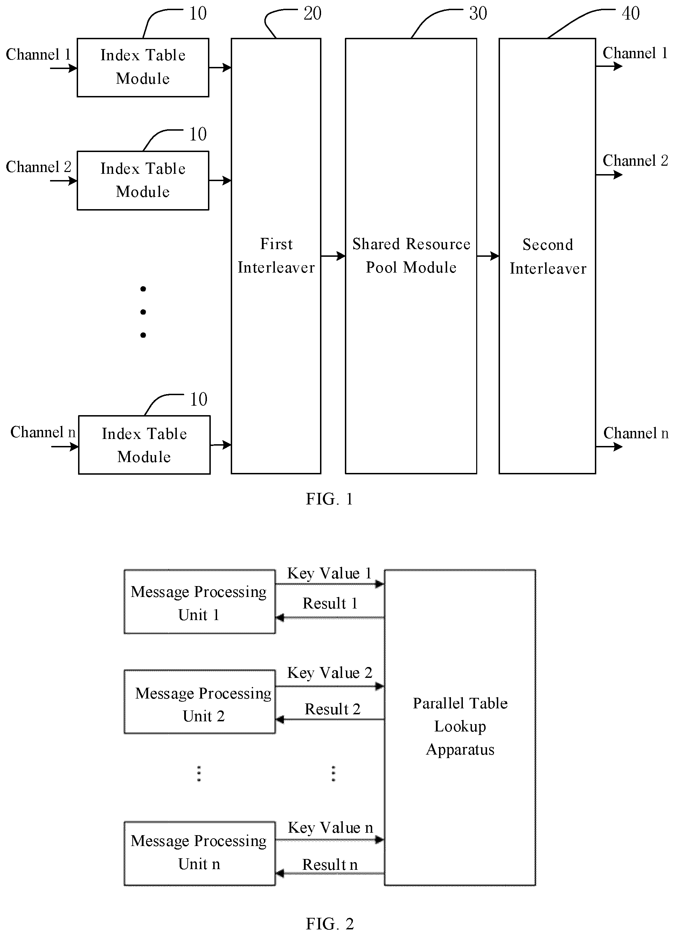

An embodiment of the present application provides a parallel table lookup apparatus, referring to Fig. 1, Fig. 1 is a schematic structural diagram of a parallel table lookup apparatus provided in an embodiment of the present application, and as shown in Fig. 1, the parallel table lookup apparatus provided in the embodiment of the present application includes a plurality of index table modules 10, a first interleaver 20, a shared resource pool module 30 and a second interleaver 40.

The plurality of index table modules 10 are respectively connected to different preset input channels and each configured to receive a key value from the preset input channel and generate a table lookup request based on the key value.

The first interleaver 20 is connected to the index table modules 10, and configured to receive the table lookup request from the index table module 10 and distribute the table lookup request.

The shared resource pool module 30 is connected to the first interleaver 20, and configured to receive the table lookup request from the first interleaver 20 and generate a matching result based on the table lookup request and a preset rule matching table.

The second interleaver 40 is connected to the shared resource pool module 30 and a plurality of preset output channels, and configured to receive the matching result from the shared resource pool module 30 and feed the matching result to the preset output channel corresponding to the preset input channel.

It should be noted that the parallel table lookup apparatus provided in the present application can be applied to a large scale integrated circuit to implement a LPM table lookup function, and in a chip design stage, functions of the modules provided in the present application are implemented, and as a whole, are embedded into various large-scale chips, so that a function of performing multi-path parallel LPM table lookup can be provided, and no software cooperation is desired in the table lookup process.

The preset input channels correspond to channels 1 to n at an input end on a left side of the index table modules 10 in Fig. 1, the preset output channels correspond to channels 1 to n at an output end on a right side of the second interleaver 40 in Fig. 1, correspondingly, the number of the index table modules 10 in the parallel table lookup apparatus is also n, after a hardware circuit of the parallel table lookup apparatus is constructed, preset rules are loaded into the apparatus through software before the apparatus being used, so as to form a preset LPM table including the preset rules and matching results corresponding to the preset rules, and if the table lookup request generated based on the key value matches with any certain preset rule, the matching result corresponding to the table lookup request is fed to the corresponding preset output channel, and therefore, the parallel table lookup apparatus can support access expectations of multi-path parallel table lookup.

Fig. 2 is a schematic diagram of an application scenario of a parallel table lookup apparatus provided in an embodiment of the present application, and as shown in Fig. 2, the parallel table lookup apparatus provided in the present application is connected to multiple message processing units, and allows the multiple message processing units to look up LPM table entries simultaneously and returns table lookup results respectively, and each of the message processing units extracts a header of a message, and extracts a key value corresponding to a format of the LPM table, and then sends the key value to the parallel table lookup apparatus to perform a query function (i.e., message processing units 1 to n send key values 1 to n to the parallel table lookup apparatus through different preset input channels); the parallel table lookup apparatus sends query results back to the message processing units, and result information can be used by each of the message processing units to correctly process the message (that is, after the parallel table lookup apparatus performs rule matching based on the key values, the parallel table lookup apparatus sends results 1 to n to the message processing units 1 to n through the preset output channels corresponding to the different preset input channels).

In order to facilitate understanding, basic principles of extracting the key value and LPM table lookup are explained as follows. That is, the key value is generally extracted from a header of a message, and based on a protocol and routing table information configured by a user, a plurality of fields for performing table lookup are determined and spliced to obtain the key value for performing table lookup; by taking a routing table of Internet Protocol version 4 (IPv4) as an example, a prefix rule in table entries mainly includes two parts: Virtual Private Network (VPN) Identity Document (ID) information and Internet Protocol (IP) Address information; therefore, it is to be determined, whether to currently extract a source IP address or a destination IP address, based on uplink attribute and downlink attribute of a current message, and then the extracted IP address is combined with the field of VPN ID to form the key value for performing table lookup; the LPM table is actually a table composed of a large number of prefix rules, as shown in Table 1, Table 1 shows an example of an LPM table composed of four prefix rules, with a width of a table entry equal to 32b, and * in the table indicating that the rule does not concern a value of a bit in a position, corresponding to the *, of the message; for example, if the key value for table lookup is 0x1234 5678, the query result hits two rules numbered 1 and 2 simultaneously, but based on the principle of LPM, a prefix length of Rule 2 is 24b, a prefix length of Rule 1 is only 16b, and thus a final matching result of the key value is Result B corresponding to the Rule 2.

Table 1

| Number | Prefix Rule (represented in hexadecimal) | Result |
|---|---|---|
| 1 | 0x1234 **** | A |
| 2 | 0x1234 56** | B |
| 3 | 0x1000 **** | C |
| 4 | 0x2000 **** | D |

In some implementations, the index table module 10 includes: index tables in multi stages and an index peripheral circuit.

The index tables in multi stages are cascaded.

The index peripheral circuit is connected to the index tables, the preset input channels and the first interleaver 20.

In some implementations, the index tables include a pre-stage index table and a last-stage index table; the index peripheral circuit includes a mask hashing module and a matching module.

An input end of the mask hashing module is connected to the preset input channels and an output end of the mask hashing module is connected to the pre-stage index table.

The matching module includes an intermediate-stage matching module and a last-stage matching module, every two index tables are connected through the intermediate-stage matching module, an input end of the last-stage matching module is connected to an output end of the last-stage index table, and an output end of the last-stage matching module is connected to the first interleaver 20.

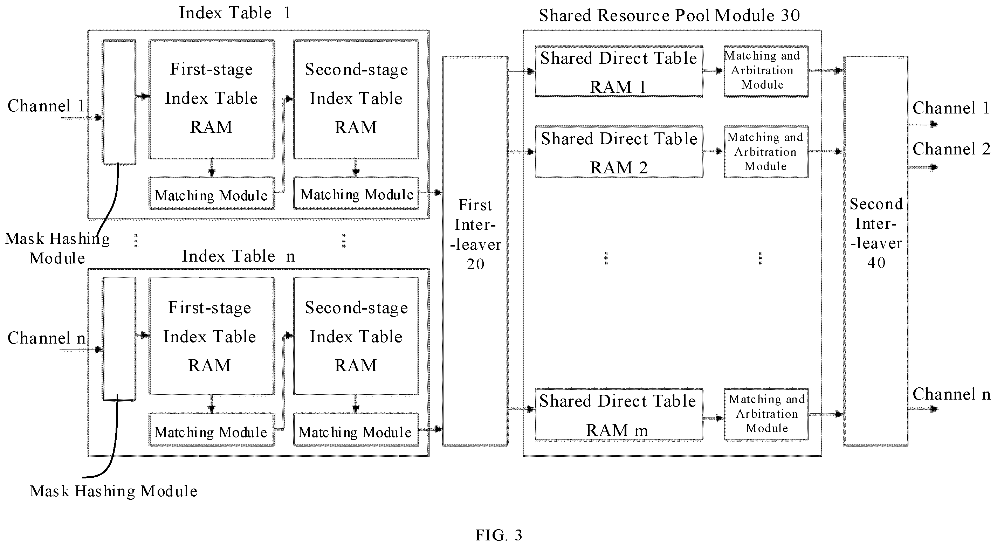

For example, referring to Fig. 3, Fig. 3 is a schematic diagram of a detailed structure of a parallel table lookup apparatus provided in an embodiment of the present application, in the example provided in Fig. 3, the index table modules 10 correspond to index tables 1 to n, each of the index table modules 10 includes index table Random Access Memories (RAMs) cascaded in multi stages, in the example, a cascade in two stages is taken as an example (which does not represent that the present application only supports the cascade in two stages, and cascades in three stages, in four stages to n stages all belong to the technical concept of the present application), a first-stage index table RAM corresponds to the pre-stage index table, a second-stage index table RAM corresponds to the last-stage index table, by taking the index table 1 as an example, the index peripheral circuit includes the mask hashing module provided between the channel 1 at the input end on the left side and the first-stage index table RAM, which is configured to perform preset mask processing on the key value input and then obtain address information subjected to hashing through a preset hashing function, the index peripheral circuit further includes the intermediate-stage matching module provided between the first-stage index table RAM and the second-stage index table RAM, and the last-stage matching module provided between the second-stage index table RAM and the first interleaver 20, the intermediate-stage matching module is configured to read row data corresponding to the first-stage index table RAM, analyze the row data and then determine whether to access the second-stage index table RAM, if it is determined to access the second-stage index table RAM, an address of the second-stage index table RAM is generated, if it is determined not to access the second-stage index table RAM, a direct table address is generated, and is directly output to the second interleaver 40 along a channel where the second-stage index table RAM and the last-stage matching module are located, in a case where the direct table address is generated, i.e., there is no need

EP 4 586 581 A1

to access a next-stage index, the second-stage index table RAM and the last-stage matching module do not process output information of the intermediate-stage matching module but directly transmit the output information to the first interleaver 20; since the cascade in two stages are taken as an example, if the second-stage index table RAM is indexed by indexing stage by stage, no next-stage index table is available, and thus the last-stage matching module is configured to read the row data corresponding to the second-stage index table RAM, analyze the row data and then generate the direct table address.

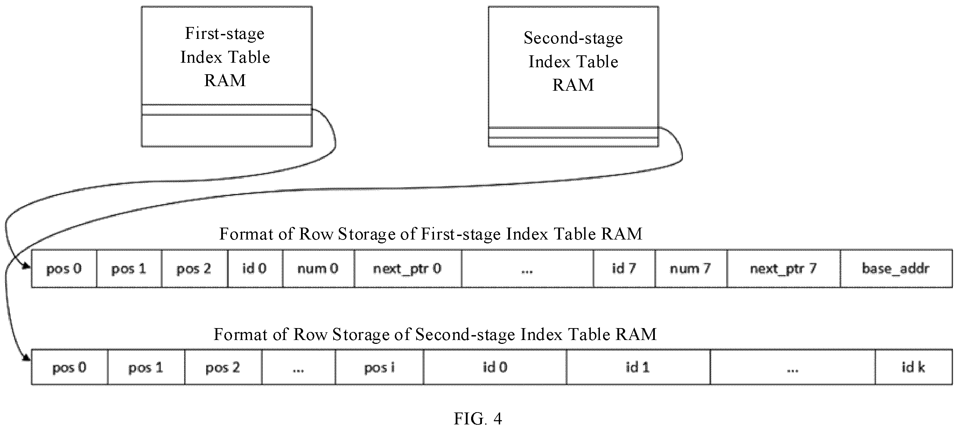

In order to facilitate understanding, a schematic diagram of a format of a row of an index table is shown in Fig. 4 as an example, and it can be seen from Fig. 4 that the content stored in the row of the first-stage index table RAM may be divided into 3 parts:

1) bit positions pos 0, pos 1 and pos 2 to be selected for a determination relating to matching;
2) existing index ID numbers and storage information under the IDs: id 0, num 0, next_ptr 0, ..., id 7, num 7, next_ptr 7; and
3) a base address of a direct table: base_addr.

The index ID number in the part 2) is an ID index formed by splicing several bits selected by using an inserted rule or a key value for performing table lookup based on several bit positions determined in the part 1), information corresponding to each ID number includes a number (corresponding to num) of rows of the direct table used under the current ID and an address (corresponding to next_ptr) of a next-stage index table of the current ID, the former is used for calculating an offset address, and the latter is used for recording an address pointing to a position of a row of the next-stage index table, the address of the next-stage index table may be an invalid value, and if it is invalid, the direct table can be directly accessed based on "the base address+ the offset address". In particular, in the example, since there are only index tables in two stages, if there is no need to access the second-stage index table, the number of rows of the direct table under the ID is 1.

Compared with a format of a row of the first-stage index table RAM, a format of a row of the second-stage index table RAM does not include the part 3) for storing the base address of the direct table, and also does not include the number of rows of the direct table and next-hop information for each ID number, because the second-stage index table RAM in the example is the last-stage index table, there is no need to store address information of the next-hop index table, and the number of rows of the direct table that is pointed to is fixed to 1.

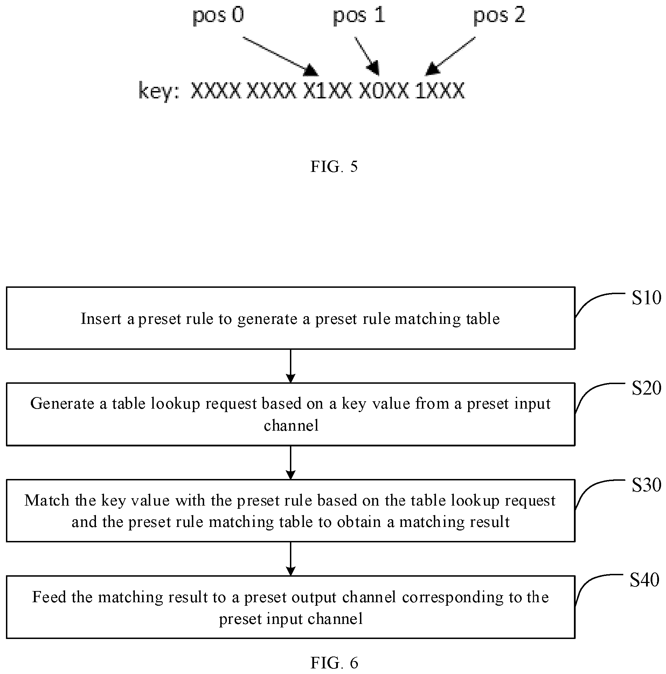

In order to facilitate understanding, a schematic diagram of an index matching rule is shown in Fig. 5 as an example, and in Fig. 5, the first-stage index table RAM is illustrated, three positions are selected based on pos 0, pos 1, and pos 2, bit values of the key value (key) at corresponding positions respectively are "1", "0", "1", (X in the key indicates that the specific numerical value at the corresponding position is not concerned), and are spliced in order, so that an index value 101(b)=5 in binary format is obtained. In the example, it is assumed that the number and the value of ID are equal to each other (but may not be equal in actual implementations), and thus the information stored corresponding to ID5 is found based on the index value, and if num5 of ID5 (the number of rows of the direct table corresponding to ID5) is greater than 1, it indicates that the next-stage index table is to be accessed, and then an address recorded in next_ptr5 is to be obtained, to access the next-stage index table, and further index matching is performed; if num5 of ID5 is not greater than 1, it indicates that a current index directly points to the direct table (num5 of ID5 being not greater than 1 indicates that the current index directly points to the direct table, which actually corresponds to a case where num5 equals 1; if num5 is 0, it is considered that the direct table address is missed, and it is defaulted to exit), and a formula for calculating the direct table address is:

$$\text{address} = \text{base\_addr} + \sum_{i=0}^{4} \text{num}_i.$$

In some implementations, the shared resource pool module 30 includes: a plurality of shared direct tables, and a match and arbitration module.

Each of the shared direct tables is connected to the first interleaver 20.

The match and arbitration module is connected to the shared direct tables and the second interleaver 40.

Similarly, referring to Fig. 3, in the example, the first interleaver 20 provided between the index table modules 10 and the shared resource pool module 30 is configured to determine whether a conflict exists between addresses of direct tables generated by multiple channels, in a case where there is no conflict, table lookup requests are directly distributed based on destination addresses; in a case where there is any conflict, the table lookup requests relating to the conflict are cached and then distributed sequentially, and other table lookup requests without conflict are directly distributed. The shared resource pool 30 includes a plurality of shared direct table RAMs and corresponding matching and arbitration modules, in the example shown in Fig. 3, a shared direct table RAMs 1 to m are included, it should be noted that, generally, the number m of the shared direct table RAMs is greater than the number n of the index table modules 10, as well as the number n of the preset input channels and the number n of the preset output channels, a number of rules stored in each row of the direct table may be custom-designed based on multiple factors such as a width of a table entry, a bit width of the direct table RAM, a sample capacity, and generally a single-digit number of rules may be stored, so that a complexity of a logic circuit of the matching and arbitration module and a proportional relation between the index tables and the direct tables can be balanced, and the smaller the index table is, the lower the incremental coefficient of resource along with the number of parallel lookup channels is; after acquiring the table lookup request, each shared direct table RAM takes out the data at the row address of the direct table corresponding to the table lookup request, a plurality of pieces of complete prefix information are stored at the positions, the matching and arbitration module accurately matches the prefix information with the input key value to obtain a matching result with a longest prefix, after the inserted rule or the key value for performing table lookup is matched, by the index table, to only a certain row address of the direct table, the data in the corresponding row of the direct table is taken out and accurately compared one piece by one piece with the rule or the key value to be matched, the matching results are arbitrated for the longest prefix based on the prefix length, if an additional TCAM or an algorithm-based TCAM is added in the design, an arbitration is to be performed again, designs for logic circuits of the matching and arbitration modules are the same, and by analyzing the data of each single row of the direct table, a plurality of LPM rules can be restored, then the key values and the LPM rules are accurately matched one by one to obtain matching results, the arbitration is performed between the matching results, and information of the result corresponding to the rule with the highest priority is output, not all of the matching and arbitration modules are operate, but only at most n shared direct table RAMs selected by n channels and the matching and arbitration modules corresponding thereto are operate.

In the example, the index table module 10 and the shared resource pool module 30 are cascaded, and are mainly associated by the interleaver and address information of the direct table. The shared direct table RAMs in the shared resource pool module 30 may be implemented in a uniform addressing manner, the index table module 10 corresponding to each of the preset input channels generates a unique direct table address, which is distributed, by the first interleaver 20 in an interleaving manner, to entries of different shared direct table RAMs of the shared resource pool module 30, and LPM results of the the shared direct table RAMs are returned to different preset output channels corresponding to the preset input channels through the second interleaver 40.

In addition, an embodiment of the present application further provides a parallel table lookup method, referring to Fig. 6, Fig. 6 is a schematic flowchart of a parallel table lookup method provided in an embodiment of the present application, the parallel table lookup method can be applied to a parallel table lookup device including the parallel table lookup apparatus described above, and as shown in Fig. 6, the parallel table lookup method provided in the embodiment of the present application includes following operations S10 to S40.

At operation S10, inserting a preset rule to generate a preset rule matching table.

At operation S20, generating a table lookup request based on a key value from a preset input channel.

At operation S30, matching the key value with the preset rule based on the table lookup request and the preset rule matching table to obtain a matching result.

At operation S40, feeding the matching result to a preset output channel corresponding to the preset input channel.

It should be understood that, the parallel table lookup method provided in the present application may be applied to the parallel table lookup apparatus described above, and after a hardware circuit of the parallel table lookup apparatus is constructed, the preset rule is inserted into the apparatus to form a preset rule matching table (i.e., an LPM table), the LPM table includes a plurality of preset rules and matching results corresponding to the preset rules, and if the table lookup request generated based on the key value from the preset input channel matches a certain preset rule, the corresponding matching result is sent to the preset output channel corresponding to the source of the key value, and the parallel table lookup method based on the apparatus can support access expectations of multi-path parallel table lookup.

In some implementations, the index table module includes index tables in multi stages, the shared resource pool module includes a plurality of direct tables; operation S10 may include, but is not limited to, following operations S11 to S14.

At operation S11, performing mask hashing processing on the preset rule and performing matching with the index tables stage by stage.

At operation S12, in response to the matching being successful and an available position existing in a row corresponding to a direct table address matched with the preset rule, inserting the preset rule into the row corresponding to the direct table address.

At operation S13, in response to the matching being successful and no available position existing in a row corresponding to a direct table address matched with the preset rule, reconstructing an index rule.

At operation S14, in response to the matching being failure, determining an insert mode for inserting the preset rule based on whether an available index position exists and whether an available row address exists in the direct table.

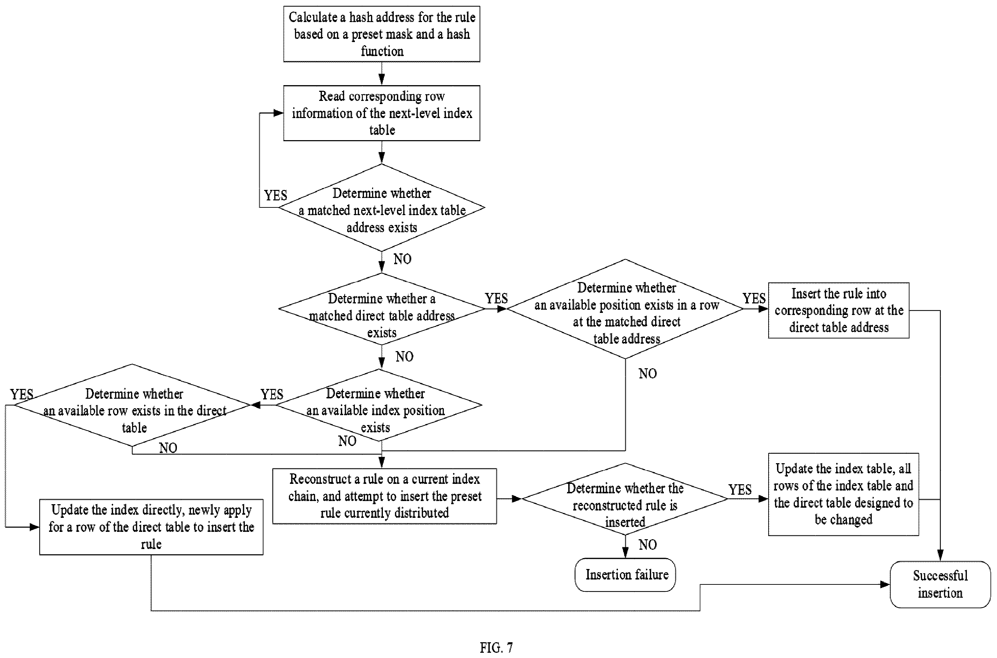

The process of inserting the preset rule (may also be referred to as a process of entering into the table) is to be described in detail, referring to Fig. 7, Fig. 7 is a schematic flowchart of a process of inserting a rule related to a parallel table lookup method provided in an embodiment of the present application, and it can be seen from Fig. 7 that after the preset rule enters the parallel table lookup apparatus, a hash address is calculated for the rule based on a preset mask and a hash function, it should be noted that, in the present application, a length of the preset mask should be less than an effective length of most prefix rules, the preset rule with the effective length less than the length of the preset mask cannot be directly applied in the parallel table lookup apparatus, and a small amount of TCAMs or an algorithm-based TCAM (e.g., a parallel hash apparatus) may be selected to perform special processing on such rule; the rule with an insufficient mask length may also be expanded and converted into a plurality of rules with longer prefixes to be distributed, and for expanding the rule, for example, a rule 0b10** with a bit width of 4b and an effective length of 2 may be expanded into two rules 0b100* and 0b101* each with an effective length of 3, * representing 0 or 1.

The hash address obtained by calculating is used for addressing and accessing the first-stage index table, and because there may be more than one stage in the index table, information of the index table is to be continuously extracted and compared, so as to determine whether to access the next-stage index table or directly hop to the direct table for final accurate matching.

If it is determined to access the next-stage index table, corresponding row information of the next-stage index table is read, then whether a matched next-stage index table address exists is to be determined again, if the matched next-stage index table address exists, reading corresponding row information of the next-stage index table and corresponding determination operation are to be performed again, until no matched next-stage index table address exists, a corresponding row address of the direct table is acquired; if it is determined not to access the next-stage index table, whether a matched direct table address exists is to be determined, if the matched direct table address exists, whether an available position exists in a row at the matched direct table address, and if the available position exists in the row at the matched direct table address, the rule is inserted into the corresponding row at the direct table address, so far, the current preset rule is successfully inserted.

If no available position exists in the row at the matched direct table address, a rule on a current index chain is reconstructed, the preset rule currently distributed is attempted to be inserted, and whether the reconstructed rule on the current index chain can be inserted is determined, if the reconstructed rule cannot be inserted, it is considered that the current preset rule is inserted unsuccessfully, in a case where the preset rule fails to be inserted, the preset rule is stored by using reserved supplementary resources (such as TCAM or algorithm-based TCAM, etc.), and if the reconstructed rule is inserted, after the index table, all rows of the index table and the direct table designed to be changed are updated, the current preset rule is successfully inserted.

If no matched next-hop information of a rule is found in a certain-stage index table, the current rule is considered not hitting the index table (i.e., no matched direct table address is available), in this case, whether an available index position exists and an available row exists in the direct table are determined, and following three cases may occur: in a case where no available index position exists, reconstructing the rule on the current index chain and subsequent operations are executed; in a case where the available index position exists, but resources of the direct table are exhausted (i.e., the direct table has no available row to be applied for) and there is no row address to be applied for, reconstructing the rule on the current index chain and subsequent operations are also executed; in a case where the available index position exists and the available row exists in the direct table, the index is directly updated, a row of the direct table is newly applied for, so as to insert the rule therein, and inserting being successful is returned.

In some implementations, operation S20 may include, but is not limited to, following operations S21 to S23.

At operation S21, performing mask hashing processing on the key value from the preset input channel to obtain hash address information.

At operation S22, processing the hash address information to obtain a unique direct table address.

At operation S23, generating the table lookup request based on the key value and the direct table address.

In some implementations, the index table module includes index tables in multi stages, the index tables include a pre-stage index table and a last-stage index table; operation S22 may include, but is not limited to, following operations S221 to S225.

At operation S221, processing the hash address information to generate an index number.

At operation S222, acquiring row data in the pre-stage index table corresponding to the index number.

At operation S223, determining whether a next-stage index table is to be accessed based on the row data.

At operation S224, in response to determining not to access the next-stage index table based on the row data, calculating an offset address based on the row data, and adding a base address of a direct table stored in the pre-stage index table to the offset address to obtain the unique direct table address.

At operation S225, in response to determining to access the next-stage index table based on the row data, acquiring row data in the next-stage index table corresponding to the index number, and determining whether a next-stage index table is to be accessed based on the row data, until the index table currently accessed is the last-stage index table, calculating an offset address based on the row data in the last-stage index table corresponding to the index number, adding a base address of a direct table stored in the pre-stage index table to the offset address to obtain the unique direct table address.

In the implementations, the mask hashing module in the parallel table lookup apparatus performs the preset mask processing on the input key value and then obtains address information subjected to hashing through a preset hashing function, indexing stage by stage is performed based on the address information, i.e., an index number, index information (i.e., row data corresponding to the index number) and a base address of the direct table are obtained based on the address information, and in the process of indexing stage by stage, if the row data is greater than 1, it indicates that a next-stage indexing is to be performed, if the row data is equal to 1, it indicates that no next-stage indexing is to be performed, if the row data is 0, it indicates that the direct table address is not hit, and the base address is added to an offset address in the index information to obtain the unique direct table address for accessing the shared direct table.

The parallel table lookup method provided by the present application overcomes the difficulty for designing a LPM module with a large-capacity routing table, and solves a problem that the resource overhead increases by multiples along with the increase of the ports for accessing the same routing table. The parallel table lookup method provided in the present application considers the current expectations of multi-path parallel table lookup, provides a hierarchical search and matching mechanism and a mechanism of sharing table-entry storage resources between multi channels, which reduces storage resource overhead for realizing LPM table lookup under the expectations of multi-path parallel table lookup.

The parallel table lookup method provided in the present application and the parallel table lookup apparatus described above belong to the same technical concept, technical details which are not described in detail in the parallel table lookup method can be referred to the parallel table lookup apparatus described above, and the parallel table lookup method provided in the present application has the same beneficial effects as the parallel table lookup apparatus described above.

In addition, an embodiment of the present application further provides a parallel table lookup device, the parallel table lookup method applied to the parallel table lookup device may be executed by the parallel table lookup apparatus, and the parallel table lookup apparatus may be implemented in a software and/or hardware manner and integrated in the parallel table lookup device. The parallel table lookup device may be a mobile device, which can communicate with a network side, such as a mobile phone, a notebook, a tablet computer and the like.

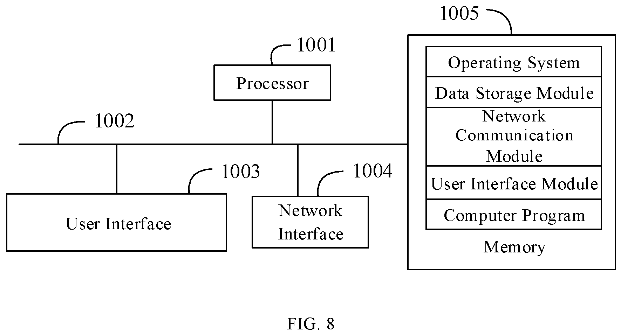

Referring to Fig. 8, Fig. 8 is a schematic diagram of a hardware structure of a parallel table lookup device provided in an embodiment of the present application. As shown in Fig. 8, the parallel table lookup device may include: a processor 1001 (e.g., Central Processing Unit (CPU)), a communication bus 1002, a user interface 1003, a network interface 1004, and a memory 1005. The communication bus 1002 is used for implementing connection and communication between these components. The user interface 1003 may include a Display, an input unit such as a Keyboard, and the user interface 1003 may also include a standard wired interface, a wireless interface. The network interface 1004 may include a standard wired interface, a wireless interface (e.g., a WIreless-FIdelity (WI-FI) interface). The memory 1005 may be a high-speed Random Access Memory (RAM) or a Non-Volatile Memory (NVM), such as a magnetic disk memory. The memory 1005 may also be a storage device separate from the processor 1001 described above.

It should be understood by those skilled in the art that the structure shown in Fig. 8 does not constitute a limitation on the parallel lookup table device, the parallel lookup table device may include more or fewer components than those shown, or a combination of some components, or have a different arrangement of components. As shown in Fig. 8, the memory 1005 as a storage medium may include an operating system, a data storage module, a network communication module, a user interface module, and a computer program.

In the parallel lookup table device shown in Fig. 8, the network interface 1004 is mainly configured to perform data communication with other devices; the user interface 1003 is mainly configured to perform data interaction with the user; the processor 1001 and the memory 1005 may be provided in the parallel lookup table device, and the parallel lookup table device calls, through the processor 1001, the computer program stored in the memory 1005 to perform the parallel lookup table method provided above and applied to the parallel lookup table device.

The parallel table lookup device provided in the present application and the parallel table lookup method provided above and applied to the parallel table lookup device belong to the same technical concept, technical details which are not described in detail in the parallel table lookup device can be referred to the parallel table lookup method described above, and the parallel table lookup device has the same beneficial effects as the parallel table lookup method described above.

In addition, an embodiment of the present application further provides a computer-readable storage medium, which may be a nonvolatile computer-readable storage medium, having a computer program stored thereon, the computer program, executed by a processor, causes the processor to implement the parallel table lookup method described above.

It should be understood by those of ordinary skilled in the art that all or some of the operations in the method, or the functional modules/components in the apparatus or the device described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the term of the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The above has specifically described some implementations of the embodiments of the present application, however, the embodiments of the present application are not limited to the above-mentioned implementations, those skilled in the art can make various equivalent modifications or substitutions without departing from the scope of the present application, the equivalent modifications or substitutions are all included within the scope claimed by the present application.

**Claims**

1.   A parallel table lookup apparatus, comprising:

   a plurality of index table modules respectively connected to different preset input channels and each configured to receive a key value from the preset input channel and generate a table lookup request based on the key value;
   a first interleaver, connected to the index table modules, and configured to receive the table lookup request from the index table module and distribute the table lookup request;
   a shared resource pool module, connected to the first interleaver, and configured to receive the table lookup request from the first interleaver and generate a matching result based on the table lookup request and a preset rule matching table; and
   a second interleaver, connected to the shared resource pool module and a plurality of preset output channels, and configured to receive the matching result from the shared resource pool module and feed the matching result to the preset output channel corresponding to the preset input channel.

2.   The apparatus of claim 1, wherein the index table modules comprise:

   index tables in multi stages, the index tables being cascaded; and
   an index peripheral circuit, connected to the index tables, the preset input channels and the first interleaver.

3.   The apparatus of claim 2, wherein the index tables comprise: a pre-stage index table and a last-stage index table; the index peripheral circuit comprises:

   a mask hashing module with an input end being connected to the preset input channels and an output end being connected to the pre-stage index table; and
   a matching module comprising an intermediate-stage matching module and a last-stage matching module, every two index tables being connected through the intermediate-stage matching module, an input end of the last-stage matching module being connected to an output end of the last-stage index table, an output end of the last-stage matching module being connected to the first interleaver.

4.   The apparatus of claim 1, wherein the shared resource pool module comprises:

   a plurality of shared direct tables respectively connected to the first interleaver; and
   a match and arbitration module, connected to the shared direct table and the second interleaver.

5.   A parallel table lookup method, applied to the parallel table lookup apparatus of any one of claims 1 to 4, comprising:

   inserting a preset rule to generate a preset rule matching table;
   generating a table lookup request based on a key value from a preset input channel;
   matching the key value with the preset rule based on the table lookup request and the preset rule matching table to obtain a matching result; and
   feeding the matching result to a preset output channel corresponding to the preset input channel.

6. The method of claim 5, wherein the generating a table lookup request based on a key value from a preset input channel comprises:

performing mask hashing processing on the key value from the preset input channel to obtain hash address information;
processing the hash address information to obtain a unique direct table address; and
generating the table lookup request based on the key value and the direct table address.

7. The method of claim 6, wherein the index table module comprises index tables in multi stages, the index tables comprise a pre-stage index table and a last-stage index table;
the processing the hash address information to obtain a unique direct table address comprises:

processing the hash address information to generate an index number;
acquiring row data in the pre-stage index table corresponding to the index number;
determining whether a next-stage index table is to be accessed based on the row data;
in response to determining not to access the next-stage index table based on the row data, calculating an offset address based on the row data, and adding a base address of a direct table stored in the pre-stage index table to the offset address to obtain the unique direct table address;
in response to determining to access the next-stage index table based on the row data, acquiring row data in the next-stage index table corresponding to the index number, and determining whether a next-stage index table is to be accessed based on the row data, until the index table currently accessed is the last-stage index table, calculating an offset address based on the row data in the last-stage index table corresponding to the index number, adding the base address of the direct table stored in the pre-stage index table to the offset address to obtain the unique direct table address.

8. The method of any one of claims 5 to 7, wherein the index table module comprises index tables in multi stages, a shared resource pool module comprises a plurality of direct tables;
the inserting a preset rule to generate a preset rule matching table comprises:

performing mask hashing processing on the preset rule and performing matching with the index tables stage by stage;
in response to the matching being successful and an available position existing in a row corresponding to a direct table address matched with the preset rule, inserting the preset rule into the row corresponding to the direct table address;
in response to the matching being successful and no available position existing in a row corresponding to a direct table address matched with the preset rule, reconstructing an index rule;
in response to the matching being failure, determining an insert mode for inserting the preset rule based on whether an available index position exists and whether an available row address exist in the direct table.

9. A parallel table lookup device, comprising: a memory, a processor, and a computer program stored on the memory and executable on the processor, the computer program, executed by the processor, causes the processor to implement the parallel table lookup method of any one of claims 5 to 8.

10. A computer-readable storage medium having a computer program stored thereon, the computer program, executed by a processor, causes the processor to implement the parallel table lookup method of any one of claims 5 to 8.

FIG. 1

FIG. 2

FIG. 3

EP 4 586 581 A1

First-stage
Index Table
RAM

Second-stage
Index Table
RAM

| pos 0 | pos 1 | pos 2 | id 0 | num 0 | next_ptr 0 | ... | id 7 | num 7 | next_ptr 7 | base_addr |
|---|---|---|---|---|---|---|---|---|---|---|

Format of Row Storage of First-stage Index Table RAM

| pos 0 | pos 1 | pos 2 | ... | pos i | id 0 | id 1 | ... | id k |
|---|---|---|---|---|---|---|---|---|

Format of Row Storage of Second-stage Index Table RAM

FIG. 4

pos 0        pos 1        pos 2

key:  XXXX XXXX X1XX X0XX 1XXX

FIG. 5

| Insert a preset rule to generate a preset rule matching table | S10 |

| Generate a table lookup request based on a key value from a preset input channel | S20 |

| Match the key value with the preset rule based on the table lookup request and the preset rule matching table to obtain a matching result | S30 |

| Feed the matching result to a preset output channel corresponding to the preset input channel | S40 |

FIG. 6

```
Calculate a hash address for the rule
based on a preset mask and a hash
function
            │
            ▼
Read corresponding row
information of the next-level index
table
```

Determine whether a matched next-level index table address exists — YES / NO

Determine whether a matched direct table address exists — YES / NO

Determine whether an available position exists in a row at the matched direct table address — YES / NO

Insert the rule into corresponding row at the direct table address

Determine whether an available index position exists — YES / NO

Determine whether an available row exists in the direct table — YES / NO

Update the index directly, newly apply for a row of the direct table to insert the rule

Reconstruct a rule on a current index chain, and attempt to insert the preset rule currently distributed

Determine whether the reconstructed rule is inserted — YES / NO

Update the index table, all rows of the index table and the direct table designed to be changed

Insertion failure

Successful insertion

FIG. 7

1005

1001

1002

Processor

1003

1004

User Interface

Network
Interface

| Operating System |
| Data Storage Module |
| Network Communication Module |
| User Interface Module |
| Computer Program |
| Memory |

FIG. 8

## INTERNATIONAL SEARCH REPORT

| International application No. |
| --- |
| **PCT/CN2023/102617** |

### A. CLASSIFICATION OF SUBJECT MATTER

H04L 45/748(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC: 报文, 并发, 并行, 查表, 冲突, 多级, 二级, 键值, 交织, 匹配, 索引, 索引表, 仲裁, 最长前缀匹配, LPM, search, table, parallel, match+, keyword, key, index

### C. DOCUMENTS CONSIDERED TO BE RELEVANT

| Category* | Citation of document, with indication, where appropriate, of the relevant passages | Relevant to claim No. |
| --- | --- | --- |
| A | CN 103401777 A (NATIONAL UNIVERSITY OF DEFENSE TECHNOLOGY OF PLA) 20 November 2013 (2013-11-20)<br>description, paragraphs 23-39, and figures 1-8 | 1-10 |
| A | US 2017046444 A1 (HUAWEI TECHNOLOGIES CO., LTD.) 16 February 2017 (2017-02-16)<br>entire document | 1-10 |
| A | WO 2016101439 A1 (ZTE CORP.) 30 June 2016 (2016-06-30)<br>entire document | 1-10 |
| A | CN 106713144 A (RUIJIE NETWORKS CO., LTD.) 24 May 2017 (2017-05-24)<br>entire document | 1-10 |
| A | CN 108134739 A (SANECHIPS TECHNOLOGY CO., LTD.) 08 June 2018 (2018-06-08)<br>entire document | 1-10 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 August 2023** | **23 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/102617**

| Patent document cited in search report | | | Publication date (day/month/year) | Patent family member(s) | | | Publication date (day/month/year) |
|---|---|---|---|---|---|---|---|
| CN | 103401777 | A | 20 November 2013 | None | | | |
| US | 2017046444 | A1 | 16 February 2017 | ES | 2813903 | T3 | 25 March 2021 |
| | | | | EP | 3131240 | A1 | 15 February 2017 |
| | | | | WO | 2015165104 | A1 | 05 November 2015 |
| | | | | EP | 3761575 | A1 | 06 January 2021 |
| | | | | US | 2020244578 | A1 | 30 July 2020 |
| | | | | CN | 104012053 | A | 27 August 2014 |
| WO | 2016101439 | A1 | 30 June 2016 | CN | 105791455 | A | 20 July 2016 |
| CN | 106713144 | A | 24 May 2017 | None | | | |
| CN | 108134739 | A | 08 June 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211263496